# FASCICULE DE BREVET EUROPEEN

(11) **EP 3 081 049 B1**
(45) Date de publication et mention de la délivrance du brevet: **01.07.2020**
(21) Numéro de dépôt: 14805846.4
(22) Date de dépôt: 27.11.2014
(51) Int. Cl.: H04W 84/18

(54) **DEPLOIEMENT DE RESEAUX AD HOC**
EINSATZ VON ADHOC-NETZWERKEN
DEPLOYMENT OF AD-HOC NETWORKS

(30) Priorité: 11.12.2013 FR 1362391
(43) Date de publication de la demande: 19.10.2016
(73) Titulaire: Commissariat à l'Énergie Atomique et aux Énergies Alternatives, 75015 Paris (FR)
(72) Inventeur: AMEYUGO, Gregorio, F-91620 La-Ville-du-Bois (FR); JEANNETEAU, Christophe, F-28210 Chaudon (FR)
(74) Mandataire: Hnich-Gasri, Naïma
(86) Numéro de dépôt international: PCT/EP2014/075767
(87) Numéro de publication internationale: WO 2015/086331

(56) Documents cités:
- EP-A1- 1 684 461
- GB-A- 2 421 153
- US-A1- 2006 176 169
- US-A1- 2007 115 895
- US-A1- 2007 150 565
- EDUARDO FEO FLUSHING ET AL: "A flow-based optimization model for throughput-oriented relay node placement in wireless sensor networks", APPLIED COMPUTING, ACM, 2 PENN PLAZA, SUITE 701 NEW YORK NY 10121-0701 USA, 18 mars 2013 (2013-03-18), pages 632-639, XP058016635, DOI: 10.1145/2480362.2480482 ISBN: 978-1-4503-1656-9

## Description

### Domaine de l'invention

L'invention concerne le domaine des télécommunications sans fil et en particulier celui des réseaux ad hoc ou réseaux maillés.

### Etat de la Technique

Dans les applications existantes, par exemple pour des événements sportifs ou des chantiers temporaires, les réseaux ad hoc sont constitués de terminaux mobiles, qui sont souvent portés par les personnes elles-mêmes. Ces terminaux mobiles coopèrent, via un protocole de routage, pour mettre en place une connectivité de bout-en-bout entre tous les terminaux formant un réseau. Ce type de réseau est parfois dit ad hoc multi-sauts ou réseau "*mesh*" en anglais.

Dans ces scénarios, un terminal ne peut conserver une connectivité au réseau ad hoc que s'il est à portée radio d'au moins un autre terminal lui-même connecté au réseau. Il est parfois possible de densifier et/ou d'étendre la couverture radio en installant quelques bornes relais radio fixes supplémentaires. Ces dernières sont alors positionnées de manière manuelle par les intervenants, sans aucune assistance technique particulière concernant le choix de l'emplacement.

Dans certains autres scénarios, l'objectif est d'assurer une connectivité sans-fil longue distance entre deux équipements en mobilité relative l'un par rapport à l'autre, par exemple dans le cas d'un robot radio-contrôlé depuis un pupitre de commande. La portée radio entre les deux équipements étant limitée, il est alors nécessaire de déployer des bornes relais intermédiaires pour assurer la continuité de la connectivité.

Toutefois, il n'existe aujourd'hui pas de solution automatique pour déterminer le placement optimal des objets communicants (par exemple quant à l'emplacement des bornes relais entre le robot et le pupitre). Dans le cas où l'intervenant est un robot, l'impossibilité de mettre en place un réseau de communications sans fil adéquat a poussé l'industrie à garder des solutions de communication filaires, avec les complications que cela implique (difficulté du robot à contourner des obstacles, rayon d'action limité, masse de câblage importante, frayage des câbles, etc.).

Le document intitulé "Deployment control of wireless multi-hop-relay mobile robots based on voronoi partition" par Takaaki Imaizumi, Hiroyuki Murakami, Yutaka Uchimura (paru dans IEEJ Transactions on Industry Applications 2012;132(3):381-388*)* décrit une méthode de déploiement de réseaux multi-hop dans des situations d'urgence. Cependant, cette approche se limite à l'établissement d'un réseau avec une topologie de Voronoi. Cette topologie amène à considérer la division de l'espace praticable par les robots en « cellules » de Voronoi, et vise à positionner un nœud de communication dans le centre de chaque cellule. La limitation de cette approche est discutée dans un document intitulé "Tessellations in Wireless Communication Networks : Voronoi and Beyond it" par Baccelli et Btaszczyszyn de l'INRIA-ENS et Université de Wroclaw. En substance, l'approche suivie est limitée à un modèle théorique de protocole, qui ne prend en compte que la localisation des antennes et ignore en particulier tous les aspects (critiques) relatifs par exemple à la physique des transmissions (puissance d'émission, problèmes d'interférences, etc.). Le document US2007/115895 décrit un réseau ad-hoc mobile hybride et un procédé pour sonexploitation, comprenant un nœud de réseau mobile et une pluralité de nœuds de réseau statiques répartis de manière aléatoire sur une zone de couverture ayant une densité prédéterminée. Les informations de position des nœuds statiques du réseau peuvent notamment être connues par triangulation avec référence à d'autres nœuds statiques. La méthode suit la position des nœuds mobiles. Le document décrit le fait de placer des nœuds statiques en excès dans un état d'hibernation et en les activant en réponse à la défaillance d'un nœud statique voisin. Le document par Eduardo Feo Flushing et al.: "A flow-based optimization model forthroughput-oriented relay node placement in wireless sensor networks", APPLIEDCOMPUTING, ACM, (2013-03-18), pages 632 - 639, XP058016635, adresse le problème déplacement de nœuds relais dans des réseaux de capteurs sans fil. Des nœuds relais supplémentaires peuvent être placés dans le but d'optimiser les performances globales du réseau en termes de débit de données. Le problème est formalisé à l'aide d'un modèle de programmation mathématique linéaire et en utilisant des emplacements possibles à l'aide d'une grille discrète. Des simulations et des expériences sont décrites.

Il existe donc un besoin industriel pressant pour des solutions techniques pratiques, concrètes, plus flexibles et optimisées. L'invention proposée dans le présent document permet de répondre à ces besoins, au moins en partie.

### Résumé de l'invention

L'invention est définie dans le jeu de revendications joint ci-après.

La présente invention consiste notamment en un système de contrôle qui permet à un opérateur ou un robot mobile de déposer les composants d'un réseau de communications de manière optimale. Le réseau ainsi créé peut être utilisé comme lien de communication avec cette personne ou robot (fil d'Ariane), ou bien comme un réseau de capteurs communicants pour surveiller des paramètres environnementaux.

Certains modes de réalisation divulguent donc l'emploi d'une base mobile qui déploie un réseau de répéteurs de communications et un système de surveillance de la qualité du lien sans fil avec un système de décision pour déposer et activer des objets communicants qui viennent renforcer ledit réseau.

Avantageusement, la présente invention s'implémentera pour la substitution de liens de communication filaires (et/ou sans fil traditionnels) par des moyens de communication selon des modes de réalisation. L'invention trouvera également application pour le nucléaire civil, par exemple pour les liens de communication entre un robot d'intervention et sa base arrière et/ou le réseau de capteurs, par exemple pour une surveillance en temps réel du niveau de radiation. Un autre contexte où la présente invention trouvera avantageusement application est celui de la sécurité publique, en particulier à la suite d'un désastre naturel (séisme, inondations, etc.). Par exemple, il sera possible d'établir rapidement un réseau de communication puissant et de haute qualité pour des intervenants dans une zone encombrée (par exemple à la suite d'un séisme). Selon certains modes de réalisation, le réseau peut s'"auto-déployer". Les objets communicants peuvent être déposés par un ou plusieurs robots, éventuellement coopératifs et/ou un ou plusieurs opérateurs à pied. Les objets communicants peuvent également être largués par des aéronefs téléguidés ou autopilotés. Les objets communicants déployés par la base ou plateforme mobile (robot, aéronefs, etc.), au fur et à mesure du déplacement de celle-ci dans un environnement donné, permettent en particulier d'assurer une connectivité satisfaisante (p.ex. en termes de qualité de service : puissance du signal, bande passante, latence, gigue, taux de perte de paquets etc.) pour les communications entre la base mobile (ou des capteurs embarqués sur celle-ci, p.ex. un capteur vidéo) et une base arrière distante (p.ex. un centre/poste de supervision) et ce via le réseau ad-hoc constitué par lesdits objets communicants dynamiquement déployés.

Il est divulgué un système pour le déploiement d'un réseau (mobile) ad hoc, comprenant une plateforme mobile associée à au moins un objet communicant, lequel est destiné à être déposé dans l'environnement depuis la plateforme mobile à mesure du déplacement de ladite plateforme mobile dans l'environnement; l'objet communicant comprenant au moins une source d'énergie et des moyens de communication sans fil et étant constitutif d'au moins une partie du réseau ad hoc; l'emplacement de chaque dépôt d'objet communicant étant déterminé en fonction de paramètres prédéfinis.

Dans un mode de réalisation, la plateforme mobile se déplace dans un environnement et transporte au moins un objet communicant. La plateforme comprend des moyens pour déployer au moins un objet communicant vers un emplacement lors du déplacement de cette plateforme mobile dans l'environnement, ledit emplacement étant déterminé en fonction de paramètres prédéfinis. Dans un mode de réalisation, la plateforme mobile comprend un grand nombre d'objets communicants qu'elle dépose dans l'environnement. Dans un autre mode de réalisation, la plateforme mobile comprend un unique objet communicant (dans ce cas, il peut y avoir une pluralité de plateformes mobiles en opération).

Dans un développement, un objet communicant comprend en outre une couche physique protectrice. Dans un développement, un objet communicant comprend en outre des moyens de locomotion. Dans un développement, un objet communicant comprend en outre un capteur, en particulier de mesure de radioactivité ambiante ou capteur vidéo. Dans un développement, un objet communicant peut être activé et/ou testé et/ou écarté et/ou déplacé et/ou identifié à distance.

Dans un développement, des moyens de déploiement sont associés à la plateforme mobile ou à un objet communicant, et les moyens de déploiement comprennent des moyens d'éjection et/ou de largage et/ou de détachement. Dans un développement, la plateforme mobile dépose activement les objets communicants. Dans un autre mode de réalisation, un objet communicant peut s'auto-déployer (par éjection ou largage ou autre). Le déploiement peut aussi être effectué par une personne (par exemple un intervenant équipé du système de décision ou de guide d'emplacement). Enfin, le déploiement peut combiner déploiement manuel et déploiement automatique, tant sur le plan de la décision que du déploiement physique effectif. Par exemple, des déploiements peuvent être proposés par la machine et validés (ou non) par l'opérateur humain. La plateforme et/ou l'opérateur peuvent physiquement déployer un ou plusieurs objets communicants. Les déploiements peuvent aussi, par exemple, être conditionnels, i.e. soumis à autorisation. Un déploiement peut aussi être empêché (par exemple si les conditions de sécurité prédéfinies ou mesurées in situ ne sont pas satisfaites, ou bien encore si l'effet du déploiement est considéré comme insuffisant), ou bien retardé. Des moyens d'authentification peuvent être requis dans certains modes de réalisation. Des systèmes de vote (par exemple entre plateformes coopérantes) peuvent être optionnellement implémentés.

Dans un développement, la plateforme mobile est un véhicule terrestre ou aérien ou amphibie ou aquatique, ledit véhicule étant télé-piloté et/ou auto-piloté.

La plateforme mobile peut comprendre un réservoir comprenant un ou plusieurs objets communicants et des moyens de déploiement d'un ou plusieurs objets communicants. Les objets communicants peuvent aussi être attachés à l'extérieur de la plateforme mobile (paroi du robot mobile), attachés en dessous (aéronef, etc.)

Le déploiement d'un ou plusieurs objets communicants peut être causé par la réception d'un signal externe provenant d'un opérateur et/ou être causé par application de paramètres prédéfinis. Le déploiement peut donc être conditionnel par exemple: autorisé ou souhaité par l'opérateur et véritablement effectué quand les conditions locales de terrain le permettent.

Dans un développement, les paramètres prédéfinis peuvent être associés à la qualité de service du réseau ad hoc souhaitée ou souhaitable ou simulée ou mesurée ou minimale et des seuils prédéfinis. Les seuils peuvent être statiques (invariants par exemple) ou au contraire dynamiques (par exemple liés à d'autres conditions, dépendants du temps, par intervalles, par zones géographiques, etc).

Dans un développement, la qualité de service du réseau ad hoc est mesurée localement par la plateforme mobile.

Dans un développement, la qualité de service n'est plus mesurée "localement" mais est mesurée en un (ou plusieurs) objets communicants. Ceci revient à la capacité de qualifier la QoS en un point sélectionné du réseau adhoc (tous les nœuds du réseau pouvant potentiellement être adressés). Dans ce développement, la qualité de service du réseau ad hoc est donc mesurée en un ou plusieurs objets communicants.

Dans un développement, la qualité de service est mesurée par une "base arrière". Cette base arrière peut être en communication avec la plateforme mobile (par un réseau dédié ou via le réseau ad hoc). Dans ce cas, la QoS mesurée est intégrative ou mesure la qualité du lien "de bout en bout" entre la base mobile et la base arrière via ces objets communicants.

De manière générale, la mesure de la qualité de service peut s'effectuer au niveau de la base mobile et/ou au niveau d'un ou plusieurs objets communicants et/ou au niveau de la base arrière. Elle peut également inclure un mécanisme permettant de remonter les mesures vers un équipement (p.ex. la base mobile ou un serveur de la base arrière) en charge du processus de décision concernant le dépôt ou déploiement d'un objet communicant. Dans le cas particulier du scénario « fil d'ariane », la qualité de service est celle associée au chemin de bout-en-bout (i.e. potentiellement via plusieurs objets communicants) entre la plateforme mobile et la base arrière. Il est à noter que les critères de QoS peuvent différer selon les sens de communication (montant ou descendant). Par exemple, on pourra constater une large bande passante dans le sens « montant » pour acheminer un flux vidéo, et une faible latence dans le sens descendant pour acheminer des commandes vers un robot (par exemple télé-opération/guidage). La qualité de service est généralement plus facilement mesurable au niveau du nœud qui est destinataire des communications (i.e. la plateforme mobile dans le sens descendant et la base arrière dans le sens montant). Il est donc avantageux de prévoir dans certains cas un mécanisme de « remontée » des mesures depuis le point de mesure vers le point de décision de déploiement d'un nouvel objet communicant (lorsque ces points ne sont pas colocalisés).

Dans un développement, des paramètres prédéfinis d'emplacement sont associés aux caractéristiques locales du terrain au moment d'un déploiement considéré. Ces caractéristiques locales du terrain au moment d'un déploiement considéré peuvent comprendre un ou plusieurs des paramètres suivants: nature du terrain (meuble, solide, stable, instable, etc), topologie du terrain (point haut, point bas, aspérités de surface, etc), température ambiante, niveau de pression, niveau d'humidité, conditions de rayonnement (niveau de radiation radioactive), niveau de luminosité, coordonnées spatiales (données GPS), niveau d'interférences radio, etc.

Dans un développement, les paramètres prédéfinis d'emplacement sont associés aux caractéristiques techniques de l'objet communicant destiné à être déposé.

Dans un développement, les paramètres prédéfinis d'emplacement sont associés à l'état du réseau après le dépôt d'un objet communicant dans l'environnement. Le déploiement d'un ou plusieurs objets communicants peut résulter ou être influencé par la vision globale du réseau, cette vision globale incluant notamment les objets communicants préalablement déposés par d'autres plateformes mobiles et/ou robots mobiles et/ou drones. La détermination de l'emplacement d'un dépôt d'un objet communicant peut s'effectuer de manière redondante et/ou distribuée.

Dans un développement, le système quelconque comprend une pluralité de plateformes mobiles. Ces plateformes mobiles peuvent globalement se concurrencer entre elles ou être coopératives entre elles. Cette coopération/concurrence peut se restreindre à certains paramètres particuliers (tel que la qualité de service). Une concurrence entre plateformes mobiles peut engendrer des redondances bienvenues dans les situations critiques.

Dans un développement, le réseau ad hoc est utilisé pour acheminer les communications de la plateforme mobile. En effet, la plateforme peut - ou pas - utiliser le réseau ad hoc pour ses "propres" communications. Par le terme "propres" (les siennes propres), il peut s'entendre les communications « entrantes » (par exemple de la base arrière vers la plateforme mobile » et « sortantes » (par exemple de la plateforme mobile vers la base arrière). Dans un scénario de "fil d'Ariane", la plateforme utilise le réseau ad hoc en cours de déploiement. Dans d'autres scénarios, la plateforme utilise un réseau qui lui est propre. Enfin, des scénarios mixtes peuvent prévoir l'utilisation conjointe (par exemple complémentaire) ou redondante des deux réseaux (ad hoc en déploiement et celui de la plateforme mobile). Il peut être souligné que l'utilisation de deux réseaux indépendants en parallèle apporte des options avantageuses, notamment en matière de sécurité informatique.

Il est divulgué une méthode pour le déploiement d'un réseau ad hoc, la méthode étant implémentée sur un ou plusieurs des moyens du système et comprend les étapes de: mesure et analyse, en continu ou au moins de manière intermittente, de conditions locales associées à la plateforme mobile et/ou à son déplacement dans l'environnement; recherche d'un compromis pour optimiser un ensemble de paramètres sélectionnés dans le groupe comprenant: topologie locale du terrain au moment d'un déploiement considéré; qualité de service souhaitée ou souhaitable ou simulée ou mesurée ou minimale; caractéristiques techniques de l'objet communicant destiné à être déployé ou déposé ; état du réseau après ajout d'un nouvel objet communicant; déploiement d'un (nouvel) objet communicant ; caractéristiques de l'environnement comme par exemple le niveau de radiation, de température, pression, humidité, et interférence radio.

Il est également divulgué un produit programme d'ordinateur.

Les avantages techniques associés aux modes de réalisation de l'invention comprennent notamment une consommation énergétique plus faible du lien de communication constitué par le réseau ad hoc (les communications multi-saut permettant de sous-dimensionner la puissance des objets communicants par rapport à la distance totale couverte par le réseau) ainsi qu'une robustesse et une flexibilité du système de communication face à des contraintes inconnues (obstacles, interférences, radiation...). Le système permet notamment de réagir en temps réel face à des contraintes qui se développent pendant le déploiement (un niveau d'interférences momentanément élevé pourrait mener au relâchement de plusieurs objets communicants en même temps pour incrémenter le « signal-to-noise ratio », mais une diminution subséquente des interférences permettrait de désactiver les objets communicants additionnels).

### Description des figures

Différents aspects et avantages de l'invention vont apparaitre en appui de la description d'un mode préféré d'implémentation de l'invention mais non limitatif, avec référence aux figures ci-dessous :
La figure 1 est une représentation du système de communication selon certains modes de réalisation de l'invention;
La figure 2 montre des exemples de détail d'un objet communicant selon l'invention;
La figure 3 illustre un exemple de fonctionnement du système de gestion et de contrôle.

### Description détaillée de l'invention

Les réseaux ad hoc sont des réseaux sans fil capables de s'organiser sans infrastructure définie préalablement. Dans un tel réseau, chaque entité (ou nœud, *node* en anglais; ou objet communicant selon l'invention) communique directement avec sa voisine. Pour communiquer avec d'autres entités, il lui est nécessaire de faire passer ses données par d'autres qui se chargeront de les acheminer. Pour cela, les entités se situent les unes par rapport aux autres, et sont capables de construire des routes entre elles: c'est le rôle du protocole de routage. Les réseaux ad hoc s'organisent d'eux-mêmes et chaque entité peut jouer différents rôles. Les réseaux ad hoc doivent gérer l'absence d'infrastructure, une bande passante parfois limitée, de possibles pertes de données, des pertes de routes, des contraintes de consommation d'énergie, une sécurité parfois limitée, des erreurs de transmission, des interférences, des nœuds cachés, l'auto configuration et la détection d'adresses dupliquées par exemple.

Les réseaux ad hoc ont été proposés comme une solution pour faciliter la connectivité et remonter des informations dans des environnements contraints et/ou mal connus. Ces réseaux ad hoc (ou encore appelés "*mesh*") sont caractérisés par le fait qu'ils ne s'appuient pas sur une infrastructure fixe (contrairement aux réseaux cellulaires par exemple). Un réseau ad hoc est donc constitué d'un ensemble de nœuds communicants qui peuvent coopérer sans infrastructure et où chacun des nœuds pour être à la fois source, récepteur ou routeur et/ou relai des paquets de données circulant dans le réseau. Les paquets de données circulent donc dans le réseau ad hoc en traversant typiquement plusieurs nœuds intermédiaires interconnectés par des liens sans-fil (principalement radio). On parle alors de routage multi-saut (ou multi-hop).

Le réseau ad hoc (sans infrastructure) ou plus généralement le réseau maillé selon l'invention (comprenant un ou plusieurs systèmes de routage) peut utiliser une grande diversité de technologies de communications entre les objets communicants constituant le réseau ad-hoc: par exemple les technologies radio dans les bandes 434 Mhz, 868 Mhz, 2,4 Ghz, 5 Ghz, ou les technologies radio WiFi / IEEE 802.11 a/b/g/n/p/ac, IEEE 802.15.4, BlueTooth / IEEE 802.15.1, WiMAX / IEEE 802.16 ou encore les futurs modes de communication ad-hoc propres aux standards de communication cellulaires de type 4G / LTE / 5G. Les liens de communications sans fil entre les objets communicants formant le réseau ad-hoc ou *mesh* peuvent également exploiter des technologies sans-fil d'autres type que la radio, telle que par exemple la technologie acoustique (p.ex. pour les communications sous-marines). Plusieurs technologies sans-fil (radio et/ou acoustiques, etc.) peuvent également coexister au sein d'un même réseau ad-hoc auquel cas un objet communicant peut comprendre plusieurs protocoles de communication sans-fil. Le réseau ad-hoc ou mesh peut également permettre des communications de type IP (c.à.d. exploitant le protocole réseau « Internet Protocol », IPv4 et/ou IPv6) entre les objets communicants auquel cas ces objets sont équipés d'une couche de protocoles de communications IP. Le protocole de routage utilisé pour la maintenance de la topologie et l'acheminement du trafic au sein du réseau ad-hoc/mesh peut être réalisé au niveau de la couche MAC (relayage) ou au niveau de la couche réseau (routage), dont en particulier avec un protocole de routage ad-hoc/mesh IP tel que par exemple AODV, AODVv2, DYMO, OLSR, OLSRv2, TBRPF, DSR, etc.

Dans le cas particulier d'un ou plusieurs intervenants (humains ou robotiques) en cas d'incident nucléaire ou intervention dans une zone de désastre naturel (ou non), un problème technique réside dans la question de l'emplacement optimal du réseau d'objets communicants, afin d'assurer un lien de communication avec la base arrière robuste et performant, mais avec un nombre minimal d'objets et une consommation réduite ou selon d'autres critères d'optimisation.

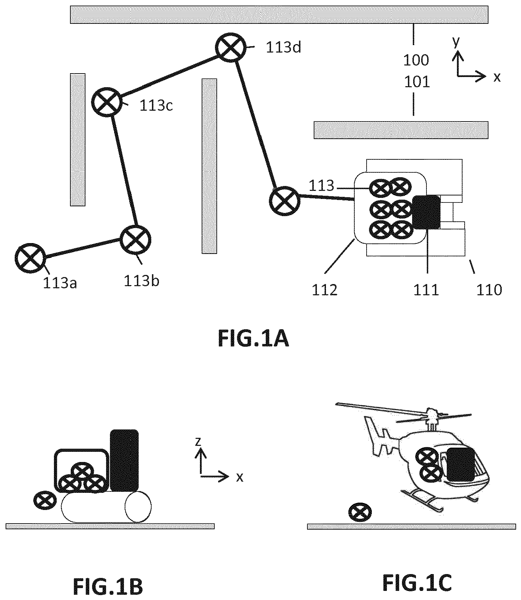

La figure 1A est une représentation du système de communication selon certains modes de réalisation de l'invention.

Le système selon l'invention comprend un système de contrôle conçu pour le déploiement d'objets communicants 113 dans un environnement composé d'obstacles 100 ou 101 par une plate-forme mobile 110.

La plate-forme mobile 110 évolue au milieu d'obstacles 100 ou 101. Ces obstacles sont des obstacles tels que des murs, pans de murs, escaliers, buttes, mats, débris, véhicules, parties de véhicules, amas de débris divers tels qu'il est possible de les trouver par exemple à la suite d'un séisme en zone urbaine. Les obstacles 100 ou 101 peuvent aussi être des obstacles naturels (terrain, rochers, rivières, montagnes, buttes, ravins, végétations...) et/ou des obstacles artificiels (détruits ou non détruits), tels que par exemple, ceux présents dans un centre commercial, une zone d'activité, une usine, un bâtiment, un parking sous-terrain, etc.

Dans certains modes de réalisation, la plate-forme mobile 110 peut comprendre un système de déploiement 111. Le système de déploiement peut comprendre un réservoir d'objets communicants 112, ainsi qu'un mécanisme pour relâcher ces objets 113 dans l'environnement tout en les activant.

Les figures 1B et 1C illustrent différents modes de réalisation de la plate-forme mobile 110. La plate-forme mobile 110 est un véhicule. Le véhicule peut être aérien, terrestre, amphibie ou aquatique. Le véhicule peut être téléguidé (i.e. guidé ou piloté à distance par une autre machine ou par un opérateur humain, ou par les deux à la fois, par exemple selon une conduite semi-automatique).

Dans un mode de réalisation particulier la plate-forme mobile 110 est un robot mobile. Dans un autre mode de réalisation la plate-forme mobile 110 est un aéronef (de tailles variables, de quelques mètres jusqu'à quelques centimètres, voire millimètres). Dans un autre mode de réalisation, la plate-forme mobile 110 est sous-marine (dans ce cas, des technologies de type sonar peuvent être utilisées, par exemple pour des applications de type surveillance côtière ou portuaire). Dans d'autres modes de réalisation, la plate-forme peut également flotter et/ou s'immerger (des moyens de communication peuvent combiner des technologies sonar et sans fil aérien). Ces modes de réalisation particuliers de la plateforme mobiles peuvent être associées à des caractéristiques particulières des objets communicants (par exemple élévation mécanique au ras de l'eau ou au dessus du niveau de la mer par suspension par ballon à hélium ou autre système d'élévation, ce de manière au moins intermittente, etc.)

Dans un mode de réalisation macroscopique, la plate-forme mobile 110 est en particulier un hélicoptère radio-piloté ou autopiloté (autonome). Dans un autre mode de réalisation, la plate-forme mobile 110 est un robot mobile (à chenilles, à reptation, à roues, etc). Dans un mode particulier de réalisation, la plate-forme mobile 110 est un robot mobile à reptation (par exemple de type *snake robot* ou "*snakebot*"). Ce type de robot biomorphique comprend de nombreux modules redondants, modules qui en particulier peuvent correspondre, au moins pour partie, à des objets-modules communicants selon l'invention (le "robot serpent" semant ou relâchant ou détachant ou larguant ou abandonnant des modules au fur et à mesure de sa progression).

Le système de contrôle 111 peut être implémenté localement au sein de la plate-forme mobile 110 et/ou accessible à distance depuis un centre de contrôle éloigné (par exemple). Une implémentation locale du système de contrôle peut, dans certains cas, être préconisée (par exemple dans le cas d'un désastre naturel, pour lequel les communications distantes peuvent être difficiles).

Les objets communicants 113 sont relâchés au fur et à mesure de la progression de la plate-forme mobile 110, à des points de l'espace choisis de façon appropriée. La figure 1A montre plusieurs de ces objets communicants ayant été déposés dans l'environnement composé d'obstacles: par exemple les objets communicants 113a, 113b, 113c, 113d. La figure illustre d'emblée le fait que le réseau maillé ainsi composé sera adapté à des communications sans fil efficace, puisque les possibles problèmes d'interférences liées aux obstacles seront évités ou amoindris.

Les objets communicants peuvent être éjectés depuis la plateforme mobile (à plus ou moins courte distance). Les objets peuvent être éjectés ou tirés (c'est-à-dire a plusieurs dizaines voire centaines de mètres). Du fait de leur protection ou de moyens d'attaches (de type harpon, adhésifs, moyen d'accrochage, etc.), les objets communicants peuvent être éjectés et attachés à des éléments de l'environnement comme des murs ou des points hauts. Les objets communicants peuvent être largués depuis un aéronef (des moyens de parachutage peuvent être embarqués dans les objets communicants par exemple).

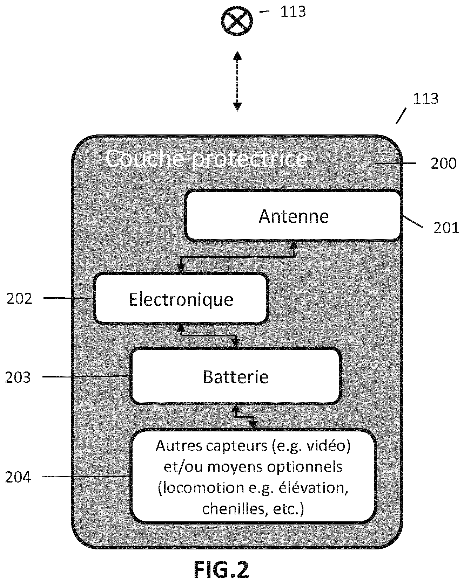

La figure 2 détaille des exemples de caractéristiques techniques d'un objet communicant 113. Un objet communicant comprend généralement une batterie (ou source d'énergie), des moyens de communication comportant une antenne ou un équivalent (et des circuits électroniques associés). L'objet communicant 113 peut également comprendre, dans certains modes de mise en œuvre, un ou plusieurs logiciels embarqués pour l'établissement d'un réseau (par exemple réseau ad hoc de communications IP sans fil, réseau maillé ou *mesh*).

Un objet communicant peut utiliser simultanément et/ou alternativement et/ou séquentiellement et/ou en parallèle des technologies de communication différentes (par exemple avec une seule ou plusieurs antennes). Ces technologies comprennent généralement des technologies sans-fil (radio et/ou acoustiques, etc.) ainsi que plusieurs protocoles de communication sans-fil. Les communications peuvent être de type IP (c.à.d. exploitant le protocole réseau « Internet Protocol », IPv4 et/ou IPv6). Le routage peut être (non exhaustif): de type MAC, AODV, AODVv2, DYMO, OLSR, OLSRv2, TBRPF, DSR, etc.

De manière optionnelle et avantageuse, un objet communicant 113 peut comprendre une couche physique protectrice. Par exemple, la couche physique protectrice peut être un revêtement de type caoutchouc ou élastomère, destiné à protéger l'objet et/ou amoindrir les chocs reçus par l'objet communicant lors de son lâcher (ou largage) dans l'environnement et/ou lors de chocs ultérieurs. Dans le cas du mode de réalisation par drone, la couche physique protectrice peut par exemple inclure des coussinets temporairement gonflables destinés à protéger les objets des chocs lors du largage. Des moyens de parachutage peuvent aussi être utilisés, en combinaison ou pas.

L'objet communicant peut également comprendre des caractéristiques techniques additionnelles optionnelles.

En particulier les objets communicants peuvent être dépourvus de moyen de locomotion, mais dans des modes de réalisation particuliers, un ou plusieurs objets communicants peuvent comprendre des moyens de locomotion propres. Les capacités de déplacement autonomes des objets communicants peuvent être limités (les objets peuvent se déplacer à courte distance de façon à allouer l'énergie disponible aux transmissions sans fil plutôt qu'à des déplacements physique) ou bien importants (si les capacités des batteries l'autorisent, par exemple si des batteries à capteur solaire ou photovoltaïque ou induction électromagnétique extrayant l'énergie de l'environnement sont utilisés). La plateforme mobile peut déposer des objets qui sont pour partie "dynamiques" (cad capables de se mouvoir plus ou moins) et pour partie "statiques" (cad qu'une fois déposés dans l'environnement, la position restera fixée). Les algorithmes de routage et les méthodes d'optimisation de constitution et de gestion du réseau peuvent prendre en compte de tels paramètres.

Pour les moyens de locomotion, par exemple, au moyen d'un ballon gonflable à l'hélium et d'une partie servant de lest, un objet communicant relâché à un emplacement donné peut s'élever dans les airs, de façon à réagir à un environnement d'obstacles changeants et/ou une adaptation dynamique (par exemple temps réel, ou quasi temps réel) aux conditions de communication. Ou bien encore, dans un autre mode de réalisation, un objet communiquant peut comprendre des moyens de locomotion terrestres (de type chenille ou bras articulé par exemple, mais les modes de réalisation de type reptation sont également permises, par exemple dans le mode de réalisation *snakebot*).

En fonction de l'application particulière, ces objets peuvent aussi comporter un ou plusieurs capteurs, de nature variable.

Par exemple, un type de capteur peut correspondre à des moyens d'acquisition d'images et/ou de vidéo. Les capteurs peuvent donc comprendre des capteurs de type CCD, CMOS, caméra Time of Flight, caméra stéréoscopique, caméra infrarouge, caméra thermique, etc (y compris selon une combinaison de ces moyens). Il peut s'agir de l'acquisition de flux vidéo comme d'images fixes (appareil photo numérique). Par ailleurs, les capteurs peuvent comporter ou être associés à la capture de données environnementales (par exemple, niveau de radiation) et utiliser le réseau adhoc pour communiquer ces données. Les objets peuvent aussi embarquer une très grande variété de capteurs ou senseurs, tels que des capteurs thermiques, électromagnétique, audio, de pression, électrique, biologique, photographique, solaire, etc.

En d'autres termes, les objets peuvent servir à la fois de moyens de relais pour optimiser un réseau ad hoc mais incidemment également servir de réseau de mesure pour des tâches et missions particulières. Par exemple en cas de séisme, il sera avantageux d'embarquer microphones à haute sensibilité (pour entendre d'éventuels survivants) et des haut-parleurs (pour communiquer en retour). Les capteurs, selon les cas, peuvent apporter des ressources aux objets communicants (et par exemple améliorer la gestion de l'énergie de la batterie localement, qui peut être interrompue si les conditions extérieures se dégradent trop par exemple, à condition qu'un redémarrage de l'objet soit raisonnablement probable).

Dans un mode de réalisation, les objets communicants 113 sont tous identiques (les caractéristiques techniques étant égales). Dans un autre mode de réalisation les objets communicants 113 peuvent être différents. Par exemple le réservoir 112 peut comprendre un certain nombre d'objets communicants 113 équipés de capteurs vidéo, d'autres équipées de moyens d'élévation, d'autres équipés de capteur solaire, etc. Le système de contrôle prend en compte l'ensemble de ces paramètres afin d'optimiser le déploiement du système. A titre d'exemple uniquement, le robot mobile pourra déployer sur les points hauts des objets équipés de moyens d'acquisition d'images, dans les zones à risques d'éboulement des objets avec des capacités de déplacement propres tels que des objets communicants équipés de moyens de locomotion propres, dans les points topographiques bas et sombres des objets équipés de batteries plus importantes, etc.

Dans différents autres modes de réalisation, tout ou partie des objets communicants peut aussi comprendre des moyens d'action, ou actuateurs ("*actuators*" en anglais). Ces moyens par exemple peuvent être de type pneumatique, hydraulique, électrique ou mécanique (ou une combinaison). Par exemple, un objet communicant peut comprendre en outre des moyens de libération d'eau potable ou de médicaments ou d'outils ou d'antitoxines, des moyens de chauffe ou de refroidissement, des moyens de percement, etc.

Dans un mode de réalisation particulier, les objets communicants sont constitués de briques standardisées mais selon des fonctionnalités différentes, et la plate forme mobile 110 assemble sur place et à la demande, en fonction des conditions de terrain, les objets communicants appropriés (avec ou sans capteurs, avec ou sans moyen de déplacement, avec ou sans senseurs, avec ou sans actuateurs).

Les objets communicants peuvent être miniaturisés (dans certains modes de réalisation, d'une taille millimétrique, jusqu'aux limites de dimension des antennes). Des modes de réalisation à des échelles micrométriques ou submicroniques sont également envisageables (nanotechnologies).

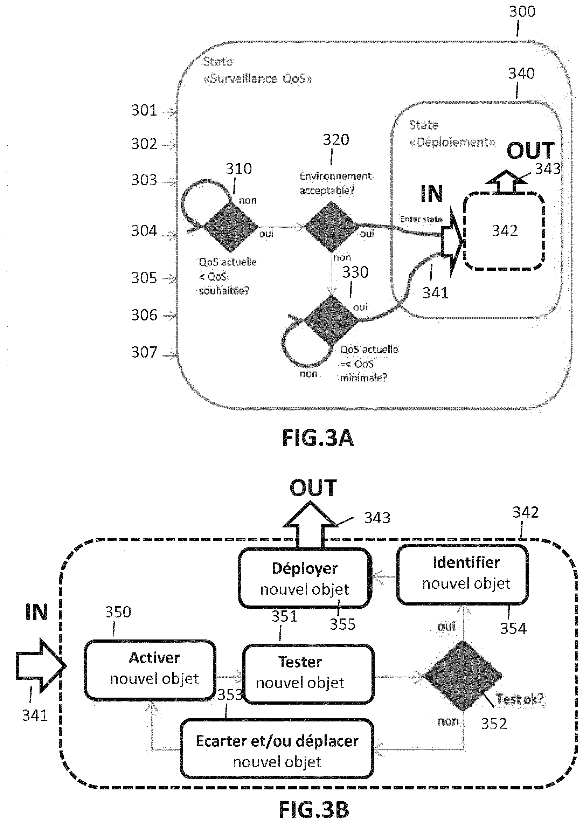

La figure 3 détaille un exemple de réalisation du système de contrôle et de gestion. Ce système de contrôle, entre autres fonctions, sert à optimiser le déploiement du réseau ad hoc. Le système de contrôle a pour but et fonction de décider les positions où les objets communicants doivent être déposés (ou "relâchés") et activés, afin d'obtenir un réseau de communications robuste, avec une consommation minimale et en fonction des besoins de qualité de service (puissance du signal, bande passante maximale, taux acceptable de perte de paquets, latence, gigue, etc.)

Le système de contrôle est concrètement géré à distance ou implémenté localement, de manière concentrée et/ou centralisée (par exemple dans un serveur installé dans le robot mobile) et/ou distribuée dans les différents appareillages selon l'invention (par exemple des parties des données et/ou des programmes sont distribuées sur le robot mobile et les différents objets communicants ainsi que via des ressources distantes, par exemple accessible par satellite, via la base arrière etc.). Le mode de réalisation "distribué" peut présenter une certaine redondance des données et programmes et donc permettre avantageusement un système de déploiement robuste. Puisqu'il n'existe pas de point unique de défaillance (ou de faiblesse) du système, si un ou plusieurs nœuds portant le système de contrôle deviennent défaillants, dans certaines conditions il est possible que les autres nœuds du réseau puissent continuer à gérer et optimiser le déploiement du réseau ad hoc. Le réseau déployé est donc robuste par conception et le déploiement lui-même est robuste.

La figure 3A détaille les éléments du système de contrôle selon un mode de réalisation particulier de l'invention.

En entrées figurent un ensemble de données, d'informations, issues, collectées, traitées ou processées provenant de capteurs ou d'autres systèmes. Ces données sont utilisées par le système de contrôle pour le déploiement des objets communicants.

Ces entrées comprennent par exemple la position (x,y,z) du réservoir d'objets communicants 301 à partir de la position initiale, ou encore la qualité du lien de communication (taux de perte de paquets, niveau du signal, bande passante, latence, gigue...), cette qualité du lien de communication pouvant être celle du lien entre la base mobile et un (ou plusieurs) objet(s) communicant(s) à proximité de la base mobile, ou encore la qualité du lien (de bout en bout) entre la base mobile et la base arrière via un ou plusieurs objets communicants. En fonction de l'application, des données environnementales 302 (par exemple, le niveau ambiant de radiation, ou son historique, afin de maximiser la durée de vie des objets communicants déployés) peut également être pris en compte. En fonction de l'application, une reconstruction numérique de l'environnement à partir de données visuelles, modèles existantes, systèmes LIDAR, etc. peut être effectuée. La simulation du réseau tel que déployé 303 peut être réalisée. Des calculs et anticipations (p.ex. via simulation) peuvent être conduits pour prévoir l'état du réseau dans certaines conditions passées ou à venir du fait de l'ajout d'un objet communicant dans l'environnement (304). Cette étape peut notamment décider du moment et de l'endroit auquel relâcher ledit objet.

Parmi les critères conduisant au dépôt ou déploiement d'un objet communicant figure la mesure de la qualité de service 305 ("*quality of service*" QoS en anglais). Cette qualité de service recoupe de nombreux sous-critères qui chacun peuvent faire l'objet d'optimisations ultérieures, par exemple: a) le niveau de signal: celui-ci peut par exemple correspondre à la puissance du signal reçu par la base mobile en provenance d'un objet communicant (sens « descendant ») et/ou à la puissance du signal reçu par un objet communicant en provenance de la base mobile (sens « montant ») b) le taux d'erreur bit, celui-ci pouvant par exemple correspondre au taux de bits erronés lors d'une transmission entre la base mobile et un objet communicant dans le sens montant et/ou descendant. c) la bande passante, celle-ci pouvant correspondre à la bande passante disponible à un instant donné entre la base mobile et un objet communicant dans le sens montant et/ou descendant, ou encore à la bande passante disponible à un instant donné entre la base mobile et la base arrière (de bout-en-bout) dans le sens montant et/ou descendant. d) la latence, celle-ci pouvant correspondre à la latence subie à un instant donné entre la base mobile et un objet communicant dans le sens montant et/ou descendant, ou encore à la latence subie à un instant donné entre la base mobile et la base arrière (de bout-en-bout) dans le sens montant et/ou descendant. e) la gigue (ou variation de la latence), celle-ci pouvant correspondre à la gigue subie à un instant donné entre la base mobile et un objet communicant dans le sens montant et/ou descendant, ou encore à la gigue subie à un instant donné entre la base mobile et la base arrière (de bout-en-bout) dans le sens montant et/ou descendant. f) le taux de pertes de paquets, celui-ci pouvant correspondre au taux de paquets erronés lors d'une transmission entre la base mobile et un objet communicant dans le sens montant et/ou descendant, ou encore au taux de paquets erronés lors d'une transmission entre la base mobile et la base arrière (de bout-en-bout) dans le sens montant et/ou descendant. g) La réception ou non réception d'une donnée applicative critique, telle que par exemple une trame de référence pour un flux vidéo. h) La détection de l'interruption de la session applicative (du flux de données) par exemple correspondant au dépassement d'un seuil prédéfini de la durée pendant laquelle aucune données applicative utilisable n'a pu être reçu correctement.

La mesure de la qualité de service peut s'effectuer au niveau de la base mobile et/ou au niveau d'un ou plusieurs objets communicants et/ou au niveau de la base arrière. Elle peut également inclure un mécanisme permettant de remonter les mesures vers un équipement (p.ex. la base mobile ou un serveur de la base arrière) en charge du processus de décision concernant le dépôt ou déploiement d'un objet communicant.

Le processus de décision peut résulter d'une approche progressive et itérative mais aussi d'une approche complète, au sens où la vision globale du réseau une fois la totalité des objets déposés dans l'environnement est prise en compte. Concrètement, le système de contrôle dans un premier mode de réalisation peut se satisfaire de déposer les objets dès que certaines conditions sont satisfaites, à charge de constater ultérieurement s'il restera assez d'objets communicants à déposer à mesure de la progression du robot mobile (ce qui peut être le cas dans certains modes de réalisation).

Dans un autre mode de réalisation, le nombre d'objets à déposer est un paramètre à part entière (compromis nombre/répartition spatiale).

Le système de contrôle peut également prendre en compte la qualité de service mesurée 305, la qualité de service souhaitée ou souhaitable 306, la qualité de service minimale 307. Par exemple, le système peut requérir des informations de l'utilisateur ou recevoir les spécifications techniques correspondantes relatives au type de données à transmettre (sécuritaires ou pas, niveau d'encryption nécessaire, vidéo / audio / etc.) et en fonction de ces informations adapter les niveaux de qualité de service souhaitée/souhaitable 306 ou minimale 307.

Le système de contrôle comprend un ou plusieurs modules de décision. Ce module comprend notamment un sous-module de surveillance 310 de la qualité de service par rapport au niveau souhaité ou souhaitable. Ce sous-module de surveillance 310 comprend également une boucle de simulation du niveau de service avec un objet communicant additionnel déposé à la position actuelle du système ou à une position correspondant à un délai de temps spécifié (en fonction de la vitesse de déplacement du système), permettant par exemple de déterminer si la dépose d'un objet communicant à la position testée apporte un gain significatif en terme de qualité de service. Cette boucle de simulation peut être par exemple réalisée sous la forme d'un logiciel capable de simuler la topologie du réseau ad-hoc et/ou les conditions de propagation et/ou les technologies et/ou protocoles de communications utilisés dans le réseau pour conduire cette simulation. Cette boucle de simulation du niveau de service avec un objet communicant additionnel peut par exemple n'être déclenchée que lorsque le niveau de service mesuré est inférieur au niveau de service souhaité ou souhaitable (étant entendu que ce dernier peut varier selon plusieurs paramètres tels que par exemple le type d'applications et/ou flux de données en cours). Par exemple, si le niveau de service mesuré est inférieur au niveau de service souhaité ou souhaitable et que le niveau de service simulé (avec l'ajout d'un objet communicant) est proche ou supérieur du niveau de service souhaité ou souhaitable, alors le module de déploiement 340 peut être activé si les conditions environnementales le permettent 320, l'environnement de dépôt étant séquentiellement ou parallèlement vérifié 320. Par exemple, en fonction de l'application, le niveau de radiation peut être surveillé et le module de déploiement 340 peut alors par exemple n'être activé que si le niveau de radiation est inférieur à un seuil donné (ceci afin par exemple d'éviter le déploiement de l'objet communicant dans une zone où il subirait un vieillissement accéléré de son l'électronique, et donc une réduction de sa durée de vie). De manière similaire, d'autres paramètres environnementaux peuvent être pris en compte 320 comme par exemple la nature et/ou la topologie du terrain, la température, le niveau de pression, le niveau d'humidité, les conditions de rayonnement et/ou de luminosité. Lorsque les conditions environnementales ne sont pas satisfaisantes on peut ainsi par exemple suspendre l'activation du module de déploiement 340 tant que le niveau de service mesure ne tombe pas sous un seuil critique (niveau de service minimal) 330. Le module de décision contient enfin un ou plusieurs algorithmes intégrant ou prenant en compte l'ensemble des paramètres et contraintes disponibles de façon à décider de la décision du dépôt de l'objet communicant dans l'environnement. Il s'agit donc d'un algorithme de décision multicritère 300 qui décide du besoin de relâcher un objet communicant additionnel dans la position actuelle en fonction des paramètres d'entrées.

Dans certains modes de réalisation, la décision de déploiement est entièrement automatique (robot autonome) et dans d'autres modes de réalisation, le déploiement est manuel (i.e. la décision de dépôt est humaine in fine, via un signal de déclenchement par exemple). Selon des modes de réalisations intermédiaires, le déploiement peut aussi être semi-automatique, c'est-à-dire alterner entre des décisions machine et des décisions humaines, par intervalles de temps et/ou par zones spatiales et/ou par l'emploi de règles et de conditions prédéfinies (ou bien encore selon une combinaison de ces conditions). Par exemple, dans les zones sans cartographie d'appui, par exemple à l'intérieur des bâtiments, le déploiement peut être automatique.

Dans le cas de la réalisation en mode totalement automatique, le système peut continuellement maintenir un ou plusieurs emplacements candidats pour le dépôt du prochain objet communicant (par exemple, point de navigation si la base mobile du système de déploiement est un robot autonome ou semi-autonome), ces emplacements étant continuellement réévalués à mesure de la progression du robot et des mesures réellement constatées sur le terrain.

Le module de déploiement 340 effectue notamment des simulations et/ou tests du réseau en fonction des objets communicants déjà déployés, des objets qui peuvent être déployés et des effets incrémentaux associés à chaque déploiement. Un objet communicant peut être activé 350, testé 351, écarté et/ou déplacé 353, identifié 354, déployé réellement 355. Par exemple, avant de déployer un nouvel objet communicant le module 340 peut tout d'abord activer 350 le module communicant afin de tester 351 son bon fonctionnement et/ou certains paramètres techniques (p.ex. le niveau de batterie). Si ces vérifications ne sont pas satisfaisantes un autre objet communicant peut alors par exemple être sélectionné. Ces tests peuvent également comprendre une étape où l'objet communicant activé est connecté au réseau ad-hoc sans toutefois être encore déployé sur le terrain, ceci dans l'optique de mesurer le niveau de service obtenu grâce à l'ajout de cet objet communicant (et ainsi avoir une estimation encore plus précise que celle obtenu précédemment par simulation). Dans ce cas, l'objet communicant peut par exemple être positionné dans une zone dédiée sur la base mobile permettant de reproduire au mieux les conditions extérieures / environnementales. Si le niveau de service alors obtenu avec l'ajout de l'objet communicant n'est pas satisfaisant le module de déploiement 340 peut décider d'écarter (p.ex. en le remplaçant par un autre objet communicant plus performant) et/ou déplacer l'objet communicant vers une nouvelle position. Lorsque les conditions de déploiement sont satisfaites, le nouvel objet communicant peut être identifié 354 avant d'être déployé 355. Cette étape d'identification 354 peut par exemple permettre d'enregistrer l'identifiant et la localisation (p.ex. coordonnées GPS) de l'objet communicant ; dans l'optique de pouvoir faciliter son contrôle à distance et/ou sa récupération ultérieure (p.ex. par la base ou plateforme mobile). En sortie 355, le système de déploiement peut donc être actionné (ouverture de trappe, rampe de lancement, détachement de lien ou d'attache, rupture de réservoir, etc.), par exemple au moyen d'un signal d'activation et du relâchement de l'objet communicant, éventuellement par sélection de l'objet communicant dans le réservoir en fonction des caractéristiques désirées puis de son dépôt, etc.

Le système de contrôle comprend également des moyens pour la surveillance du réseau, qui permet d'activer et désactiver des objets à distance en fonction des besoins du réseau (par exemple, la création d'une nouvelle route autour d'un obstacle peut mener à la désactivation d'une deuxième route déjà déposée afin de préserver l'énergie des batteries des objets qui font partie de cette première route).

L'optimisation du réseau peut être globale i.e. prendre en compte des objets communicants préalablement déployés (e.g. par d'autres robots mobiles et/ou d'autres drones). En d'autres termes, l'optimisation du réseau mobile ad hoc est globale: les décisions de déposition des objets communicants résultent de la vision globale du réseau.

Dans un mode de réalisation, les plateformes mobiles peuvent fonctionner "en essaim", par exemple "patrouiller" dans une zone. Les plateformes mobiles peuvent être "coopératives" (i.e. tenir compte des actions des unes et des autres). Elles peuvent aussi, au moins pour partie et selon des critères prédéfinis, se comporter de manière concurrente.

Différents modes de réalisation de l'invention peuvent s'implémenter à partir d'éléments matériel et/ou logiciel (en particulier en tant que produit programme d'ordinateur sur un support lisible par ordinateur, ledit support pouvant être électronique, magnétique ou optique par exemple)

## Revendications

1. Système pour le déploiement d'un réseau ad hoc, comprenant une plateforme mobile associée à au moins un objet communicant, lequel est déposé dans l'environnement depuis la plateforme mobile à mesure du déplacement de ladite plateforme mobile dans l'environnement; l'objet communicant comprenant au moins une source d'énergie et des moyens de communication sans fil et étant constitutif d'au moins une partie du réseau ad hoc ;
l'emplacement de chaque dépôt d'objet communicant étant déterminé en fonction de paramètres prédéfinis , lesdits paramètres prédéfinis étant associés à une qualité de service du réseau ad hoc associée au chemin de bout en bout entre la plateforme mobile et une base arrière en communication avec la plateforme mobile ;
le réseau déployé d'objets communicants déposés, dit ad hoc, étant utilisé pour acheminer les communications de la plateforme mobile ;
la qualité de service du réseau ad hoc étant mesurée par une base arrière en communication avec la plateforme mobile.

2. Système selon la revendication 1, un objet communicant comprenant en outre une couche physique protectrice.

3. Système selon l'une quelconque des revendications précédentes, un objet communicant comprenant en outre des moyens de locomotion.

4. Système selon l'une quelconque des revendications précédentes, un objet communicant comprenant en outre un capteur, en particulier de mesure de radioactivité ambiante ou d'acquisition d'images ou de vidéo.

5. Système selon l'une quelconque des revendications précédentes, un objet communicant pouvant être activé et/ou testé et/ou écarté et/ou déplacé et/ou identifié à distance.

6. Système selon l'une quelconque des revendications précédentes, des moyens de déploiement étant associés à la plateforme mobile ou à un objet communicant, les moyens de déploiement comprenant des moyens d'éjection et/ou de largage et/ou de détachement.

7. Système selon l'une quelconque des revendications précédentes, la plateforme mobile étant un véhicule terrestre ou aérien ou amphibie ou aquatique, ledit véhicule étant télé-piloté et/ou auto-piloté.

8. Système selon l'une quelconque des revendications précédentes, les paramètres prédéfinis étant associés à la qualité de service du réseau ad hoc souhaitée et/ou souhaitable et/ou simulée et/ou mesurée et/ou minimale et des seuils prédéfinis.

9. Système selon la revendication précédente, la qualité de service du réseau ad hoc étant mesurée localement par la plateforme mobile.

10. Système selon la revendication 8, la qualité de service du réseau ad hoc étant mesurée par un ou plusieurs objets communicants.

11. Système selon l'une quelconque des revendications précédentes, les paramètres prédéfinis d'emplacement étant associés aux caractéristiques locales du terrain au moment d'un déploiement considéré.

12. Système selon l'une quelconque des revendications précédentes, les paramètres prédéfinis d'emplacement étant associés aux caractéristiques techniques de l'objet communicant destiné à être déposé.

13. Système selon l'une quelconque des revendications précédentes, les paramètres prédéfinis d'emplacement étant associés à l'état du réseau après le dépôt d'un objet communicant dans l'environnement.

14. Système selon l'une quelconque des revendications précédentes, comprenant une pluralité de plateformes mobiles.

15. Méthode pour le déploiement d'un réseau ad hoc, comprenant les étapes de :
mesure au moins de manière intermittente de conditions locales associées à une plateforme mobile associée à au moins un objet communicant, lequel objet communicant est déposé dans l'environnement depuis la plateforme mobile à mesure du déplacement de ladite plateforme mobile dans l'environnement, constituant un réseau ad hoc;
l'objet communicant comprenant au moins une source d'énergie et des moyens de communication sans fil et étant constitutif d'au moins une partie du réseau ad hoc ; l'emplacement de chaque dépôt d'objet communicant étant déterminé en fonction de paramètres prédéfinis, lesdits paramètres prédéfinis étant associés à une qualité de service du réseau ad hoc associée au chemin de bout en bout entre la plateforme mobile et une base arrière en communication avec la plateforme mobile ;
la qualité de service du réseau ad hoc étant mesurée par une base arrière en communication avec la plateforme mobile via des objets communicants déposés :
le réseau déployé ad hoc étant utilisé pour acheminer les communications entre la plateforme mobile et la base arrière en communication avec la plateforme mobile.

16. Produit programme d'ordinateur, ledit programme d'ordinateur comprenant des instructions de code permettant d'effectuer les étapes du procédé selon la revendication 15, lorsque ledit programme est exécuté sur un ordinateur.

## Patentansprüche

1. System zum Einsatz eines Ad hoc-Netzwerks, beinhaltend eine mobile Plattform, welche mindestens einem kommunizierenden Objekt zugeordnet ist, welches in der Umgebung von der mobilen Plattform im Zuge der Bewegung der mobilen Plattform in der Umgebung abgesetzt wird; wobei das kommunizierende Objekt mindestens eine Energiequelle und drahtlose Kommunikationsmittel beinhaltet und aus mindestens einem Bestandteil des Ad hoc-Netzwerks gebildet ist;
wobei der Absetzstandort eines jeden kommunizierenden Objekts angesichts vorbestimmter Parameter bestimmt wird, wobei die vorbestimmten Parameter einer Dienstqualität des Ad hoc-Netzwerks zugeordnet sind, welche dem gesamten Weg zwischen der mobilen Plattform und einer mit der mobilen Plattform kommunizierenden hinteren Basis zugeordnet ist;
wobei das eingesetzte Netzwerk abgesetzter kommunizierender Objekte, genannt ad hoc, zum Transport der Kommunikationen der mobilen Plattform verwendet wird;
wobei die Dienstqualität des Ad hoc-Netzwerks durch eine hintere Basis in Kommunikation mit der mobilen Plattform gemessen wird.

2. System nach Anspruch 1, bei welchem ein kommunizierendes Objekt zudem eine physische Schutzschicht beinhaltet.

3. System nach einem der vorhergehenden Ansprüche, bei welchem ein kommunizierendes Objekt zudem Fortbewegungsmittel beinhaltet.

4. System nach einem der vorhergehenden Ansprüche, bei welchem ein kommunizierendes Objekt zudem einen Sensor beinhaltet, insbesondere zur Messung umgebender Radioaktivität oder zur Aufnahme von Bildern oder Video.

5. System nach einem der vorhergehenden Ansprüche, bei welchem ein kommunizierendes Objekt aus der Ferne aktiviert und/oder getestet und/oder entfernt und/oder bewegt und/oder identifiziert werden kann.

6. System nach einem der vorhergehenden Ansprüche, bei welchem Einsatzmittel der mobilen Plattform oder einem kommunizierenden Objekt zugeordnet sind, wobei die Einsatzmittel Mittel zum Auswerfen und/oder Abwerfen und/oder Lösen beinhalten.

7. System nach einem der vorhergehenden Ansprüche, bei welchem die mobile Plattform ein Straßen- oder ein Luft-, oder ein Amphibien- oder ein Wasserfahrzeug ist, wobei das Fahrzeug ferngesteuert und/oder selbstgesteuert ist.

8. System nach einem der vorhergehenden Ansprüche, bei welchem die vorbestimmten Parameter der gewünschten und/oder wünschenswerten und/oder simulierten und/oder gemessenen und/oder minimalen Dienstqualität des Ad hoc-Netzwerks und vorbestimmten Schwellenwerten zugeordnet sind.

9. System nach dem vorhergehenden Anspruch, bei welchem die Dienstqualität des Ad hoc-Netzwerks lokal durch die mobile Plattform gemessen wird.

10. System nach dem Anspruch 8, bei welchem die Dienstqualität des Ad hoc-Netzwerks durch ein oder mehrere kommunizierendes Objekte gemessen wird.

11. System nach einem der vorhergehenden Ansprüche, bei welchem die vorbestimmten Standortparameter den lokalen Merkmalen des Geländes zum Zeitpunkt eines betrachteten Einsatzes zugeordnet sind.

12. System nach einem der vorhergehenden Ansprüche, bei welchem die vorbestimmten Standortparameter den technischen Merkmalen des kommunizierenden Objekts, welches abgesetzt werden soll, zugeordnet sind.

13. System nach einem der vorhergehenden Ansprüche, bei welchem die vorbestimmten Standortparameter dem Zustand des Netzwerks nach Absetzen eines kommunizierenden Objekts in der Umgebung zugeordnet sind.

14. System nach einem der vorhergehenden Ansprüche, welches eine Vielzahl von mobilen Plattformen beinhaltet.

15. Verfahren zum Einsatz eines Ad hoc-Netzwerks, folgende Schritte beinhaltend:
Messen, zumindest zeitweilig, lokaler Bedingungen, die einer mobilen Plattform zugeordnet sind, welche mindestens einem kommunizierenden Objekt zugeordnet ist, wobei das kommunizierende Objekt in der Umgebung von der mobilen Plattform im Zuge der Bewegung der mobilen Plattform in der Umgebung abgesetzt wird, wodurch es ein Ad hoc-Netzwerk bildet; wobei das kommunizierende Objekt mindestens eine Energiequelle und drahtlose Kommunikationsmittel beinhaltet und aus mindestens einem Bestandteil des Ad hoc-Netzwerks gebildet ist; wobei der Absetzstandort eines jeden kommunizierenden Objekts angesichts vorbestimmter Parameter bestimmt wird, wobei die vorbestimmten Parameter einer Dienstqualität des Ad hoc-Netzwerks zugeordnet sind, welche dem gesamten Weg zwischen der mobilen Plattform und einer mit der mobilen Plattform kommunizierenden hinteren Basis zugeordnet ist;
wobei die Dienstqualität des Ad hoc-Netzwerks durch eine hintere Basis in Kommunikation mit der mobilen Plattform über abgesetzte kommunizierende Objekte gemessen wird;
wobei das eingesetzte Ad hoc-Netzwerk verwendet wird, um die Kommunikationen zwischen der mobilen Plattform und der hinteren Basis in Kommunikation mit der mobilen Plattform zu transportieren.

16. Computerprogrammprodukt, wobei das Computerprogramm Code-Befehle beinhaltet, welche es ermöglichen, die Schritte des Verfahrens nach dem Anspruch 15 durchzuführen, wenn das Programm auf einem Computer ausgeführt wird.

## Claims

1. A system for deploying an ad hoc network, comprising a movable platform associated with at least one communicating object, which is released into the environment from the movable platform as said movable platform moves in the environment, the communicating object comprising at least one energy source and wireless communication means and being formed by at least one part of the ad hoc network,
the site of each point of release of a communicating object being determined as a function of predefined parameters, said predefined parameters being associated with a quality of service of the ad hoc network associated with the end-to-end path between the movable platform and a rear base communicating with the movable platform,
the deployed network of released communicating objects, called ad hoc, being used to route the communications of the movable platform;
the quality of service of the ad hoc network being measured by a rear base communicating with the movable platform.

2. The system as claimed in claim 1, a communicating object further comprising a physical protective layer.

3. The system as claimed in any one of the preceding claims, a communicating object further comprising locomotion means.

4. The system as claimed in any one of the preceding claims, a communicating object further comprising a sensor, in particular for measuring ambient radioactivity or for acquiring images or video.

5. The system as claimed in any one of the preceding claims, a communicating object being able to be activated and/or tested and/or removed and/or moved and/or identified remotely.

6. The system as claimed in any one of the preceding claims, with deployment means being associated with the movable platform or with a communicating object, the deployment means comprising ejection and/or dropping and/or detachment means.

7. The system as claimed in any one of the preceding claims, the movable platform being a land or airborne or amphibious or aquatic vehicle, said vehicle being remote-piloted and/or auto-piloted.

8. The system as claimed in any one of the preceding claims, the predefined parameters being associated with the desired and/or desirable and/or simulated and/or measured and/or minimal quality of service of the ad hoc network and with predefined thresholds.

9. The system as claimed in the preceding claim, the quality of service of the ad hoc network being measured locally by the movable platform.

10. The system as claimed in claim 8, the quality of service of the ad hoc network being measured by one or more communicating objects.

11. The system as claimed in any one of the preceding claims, the predefined site parameters being associated with the local features of the terrain at the time of a considered deployment.

12. The system as claimed in any one of the preceding claims, the predefined site parameters being associated with the technical features of the communicating object intended to be dropped.

13. The system as claimed in any one of the preceding claims, the predefined site parameters being associated with the state of the network following the release of a communicating object into the environment.

14. The system as claimed in any one of the preceding claims, comprising a plurality of movable platforms.

15. A method for deploying an ad hoc network, comprising the following steps:
at least intermittently measuring local conditions associated with a movable platform associated with at least one communicating object, which communicating object is released into the environment from the movable platform as said movable platform moves in the environment, forming an ad hoc network, the communicating object comprising at least one energy source and wireless communication means and being formed by at least one part of the ad hoc network, the site of each point of release of a communicating object being determined as a function of predefined parameters, said predefined parameters being associated with a quality of service of the ad hoc network associated with the end-to-end path between the movable platform and a rear base communicating with the movable platform,
the quality of service of the ad hoc network being measured by a rear base communicating with the movable platform via released communicating objects,
the deployed ad hoc network being used to route the communications between the movable platform and the rear base communicating with the movable platform.

16. A computer program product, said computer program comprising code instructions for performing the steps of the method as claimed in claim 15, when said program is executed on a computer.
